# FASCICULE DE BREVET EUROPEEN

(11) **EP 1 714 105 B1**
(45) Date de publication et mention de la délivrance du brevet: **04.01.2012**
(21) Numéro de dépôt: 05717584.6
(22) Date de dépôt: 09.02.2005
(51) Int. Cl.: F42B 5/15, B64D 1/02

(54) **DISPOSITIF SECURISE D'EMPORT ET DE TIR DE CARTOUCHES TELLES QUE DES CARTOUCHES DE LEURRAGE**
GESICHERTE VORRICHTUNG ZUR ZUFÜHRUNG UND ZÜNDUNG VON PATRONEN WIE ZUM BEISPIEL SCHEINPATRONEN
SECURED DEVICE FOR THE DELIVERY AND FIRING OF CARTRIDGES SUCH AS DECOY CARTRIDGES

(30) Priorité: 10.02.2004 FR 0401295
(43) Date de publication de la demande: 25.10.2006
(73) Titulaire: ALKAN, 94460 Valenton (FR)
(72) Inventeur: BANSARD, Joël, F-91330 Yerres (FR)
(74) Mandataire: Colas, Jean-Pierre
(86) Numéro de dépôt international: PCT/FR2005/000283
(87) Numéro de publication internationale: WO 2005/078378

(56) Documents cités:
- GB-A- 2 176 881
- US-A- 4 644 845
- US-A- 5 413 024

## Description

La présente invention se rapporte à un dispositif sécurisé d'emport et de tir de cartouches telles que des cartouches de leurrage.

On connaît de la technique antérieure des dispositifs de leurrage comprenant typiquement des chargeurs adaptés pour recevoir des cartouches de leurrage, ces chargeurs étant destinés à être positionnés dans et connectés électriquement à des lance-leurres montés sur des engins mobiles tels que des aéronefs.

De tels dispositifs sont utilisés couramment dans le domaine des techniques d'armement pour tirer des cartouches de leurrage permettant de protéger des engins mobiles tels que des aéronefs vis-à-vis d'hostiles.

Selon le type de l'hostile, on utilise des leurres à infrarouge ou bien des leurres électromagnétiques. Les leurres tirés dévient l'hostile de sa cible, évitant ainsi la destruction partielle ou totale de celle-ci.

Ces dispositifs de la technique antérieure issus des techniques de l'armement nécessitent de grandes précautions de manipulation.

Il faut en effet respecter un certain nombre de consignes de sécurité pour éviter des mises à feu intempestives de cartouches notamment lors de la manipulation et de la mise à poste de ces chargeurs, et l'on doit pour cette raison recourir à du personnel formé spécifiquement à de telles consignes.

C'est en particulier pour cette raison que l'on n'a jusqu'à présent pas mis en service de système de leurrage sur les aéronefs civils : les consignes de sécurité associées aux systèmes de leurrage existants sont difficiles à concilier avec l'environnement humain et réglementaire de l'aviation civile.

Or, comme chacun sait, il existe un réel besoin de protection des aéronefs civils notamment vis-à-vis des menaces terroristes.

On connaît du document GB 2 176 881, qui décrit le préambule de la revendication 1, un dispositif d'emport et de tir de missiles comprenant une pluralité de logements destinés à recevoir des missiles et un obturateur rotatif muni d'un orifice permettant la sortie des missiles lors des tirs.

Lorsque ce dispositif de la technique antérieure est chargé, l'orifice de l'obturateur se trouve toujours en vis-à-vis d'un missile, de sorte qu'il existe un risque pour qu'un opérateur non qualifié puisse accéder à une chambre dans laquelle se trouve un missile.

La présente invention a pour but de fournir un dispositif d'emport et de tir de cartouches telles que des cartouches de leurrage pouvant être utilisé en toute sécurité dans un environnement civil.

On atteint ce but de l'invention avec un dispositif d'emport et de tir de cartouches telles que des cartouches de leurrage selon la revendication 1.

Le fait de prévoir un logement adapté pour rester vide permet, en position de sécurité, d'empêcher l'accès aux cartouches par un opérateur non qualifié, et ainsi d'éviter toute mise à feu intempestive.

Suivant d'autres caractéristiques optionnelles de la présente invention :
- ledit boîtier est sensiblement cylindrique, l'ensemble desdits logements étant disposés de manière sensiblement circulaire à l'intérieur dudit boîtier, et ledit obturateur est sensiblement circulaire et monté rotatif coaxialement audit boîtier de manière que ledit orifice puisse se déplacer sélectivement de l'un à l'autre desdits logements,
- ledit boîtier comporte un seul logement adapté pour rester vide, et ledit obturateur comprend un seul orifice,
- ledit boîtier comporte une pluralité de logements adaptés pour rester vides disposés de manière alternée avec les logements adaptés pour recevoir des cartouches, et ledit obturateur comprend autant d'orifices que lesdits logements adaptés pour recevoir des cartouches, ces orifices étant répartis sur ledit obturateur de la même manière que lesdits logements adaptés pour recevoir des cartouches,
- lesdits moyens de connexion comprennent un connecteur rackable,
- ledit dispositif comprend des battants de protection desdits moyens de connexion escamotables automatiquement lors de la mise à poste dudit dispositif,
- ledit dispositif comprend des moyens pour asservir ledit obturateur en position,
- ledit dispositif comprend une pluralité de pattes de fixation,
- ledit dispositif comprend des cornières de guidage,
- ledit dispositif comprend des moyens de dégivrage,
- ledit dispositif comprend un volet articulé sur ledit obturateur entre une position où il obture ledit orifice et une position où il libère cet orifice,
- ledit obturateur comprend un trou adapté pour défiler devant des zones de couleurs indicatives de la position de sécurité ou armée du dispositif.

La présente invention se rapporte également à un engin mobile tel qu'un aéronef, équipé d'au moins un dispositif conforme à ce qui précède.

De préférence, ledit engin mobile comprend une cavité recevant ledit dispositif, ladite cavité étant conformée de manière que ledit dispositif ne soit sensiblement pas protubérant par rapport au volume enveloppe dudit engin.

La présente invention se rapporte également à l'utilisation d'un dispositif conforme à ce qui précède, dans laquelle on place des cartouches dans tous les logements sauf dans l'au moins un logement adapté pour rester vide, et on déplace sélectivement ledit obturateur entre ladite position de sécurité et ladite position armée.

On peut prévoir de faire pivoter ledit volet de manière à libérer ledit au moins un orifice dudit obturateur juste avant de faire pivoter ledit obturateur.

D'autres caractéristiques et avantages de la présente invention apparaîtront à l'examen de la planche de dessins annexée, dans laquelle :
- la figure 1 est une vue en perspective de l'avant d'un dispositif selon l'invention,
- la figure 2 est une vue de face de ce dispositif,
- la figure 3 est une vue en perspective de l'arrière de ce dispositif,
- la figure 4 est une vue de côté de ce dispositif,
- la figure 5 est une vue analogue à celle de la figure 1 d'une variante du dispositif selon l'invention,
- la figure 6 est une vue analogue à celle de la figure 2 de cette variante,
- la figure 7 est une vue en coupe axiale d'un système de sécurité équipant le dispositif des figures 1 à 4,
- les figures 8 à 10 sont des vues de face de ce système de sécurité, dans différentes configurations,
- les figures 11 à 14 sont analogues aux figures 7 à 10, pour un système de sécurité équipant le dispositif des figures 5 et 6,
- les figures 15 est 16 sont des vues en coupe axiale d'un système permettant de protéger les moyens de connexion du dispositif selon l'invention, en positions respectivement déconnectée et connectée, et
- la figure 17 représente de manière très simplifiée un aéronef équipé d'un dispositif selon l'invention.

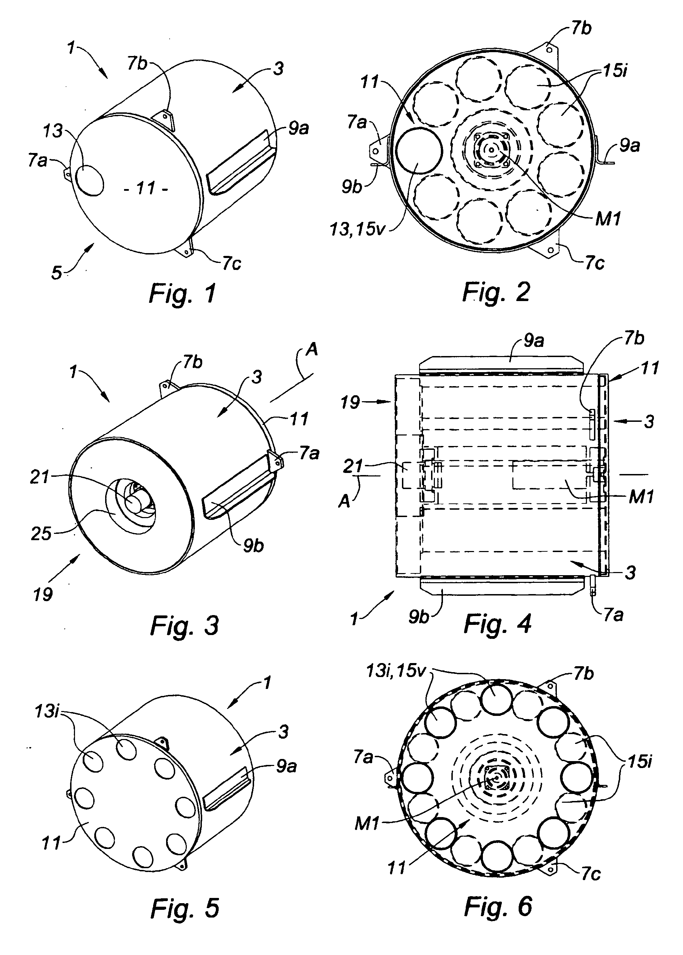

On se reporte à présent à la figure 1 sur laquelle on voit que le dispositif selon l'invention 1 comprend un boîtier 3 présentant une forme de préférence sensiblement cylindrique.

Au voisinage de la face avant 5 de ce boîtier, se trouvent trois pattes de fixation 7a, 7b, 7c.

Sur la paroi extérieure du boîtier 3 sont disposées deux cornières de fixation diamétralement opposées, dont l'une 9a est visible sur la figure 1 et dont l'autre 9b est visible sur la figure 3.

Comme cela est visible sur les figures 1 et 2, le boîtier 3 est fermé sur sa face avant 5 par un obturateur sensiblement circulaire 11 percé d'un orifice 13 lui aussi sensiblement circulaire et disposé au voisinage de la périphérie de l'obturateur 11.

En se reportant en particulier à la figure 2, on voit qu'à l'intérieur du boîtier 3 se trouve une pluralité de logements sensiblement cylindriques 15i répartis de manière sensiblement circulaire au voisinage de la paroi intérieure du boîtier 3.

Tous les logements 15i sont adaptés pour recevoir des cartouches (non représentées) à l'exception d'un logement 15v qui, lui, est adapté pour rester vide.

Les logements 15i comprennent donc des connections électriques permettant la mise à feu des cartouches, tandis que le logement 15v est dépourvu de connections électriques.

On voit sur les figures 2 et 4 que le dispositif 1 selon l'invention comprend également un moteur de préférence électrique M1 susceptible d'entraîner en rotation l'obturateur 11 autour de l'axe A du boîtier cylindrique 3.

En se reportant aux figures 3 et 4, on voit que le dispositif selon l'invention comprend également, sur son extrémité arrière 19, des moyens de connexion 21.

Ces moyens de connexion peuvent comprendre, classiquement, un connecteur muni d'une pluralité de broches reliées à un circuit électrique permettant d'une part de mettre à feu les cartouches disposées dans les logements 15i, et d'autre part de commander le moteur électrique M1.

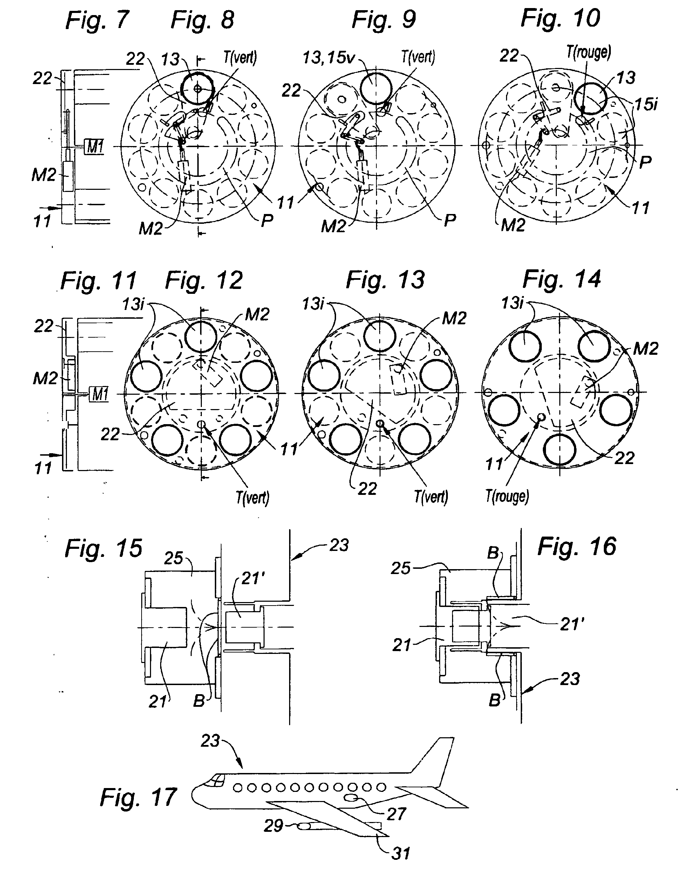

De préférence, les moyens de connexion 21 sont « rackables » c'est-à-dire qu'ils peuvent être reliés électriquement par simple coulissement du dispositif 1 le long de son axe A à des moyens de connexion complémentaires solidaires d'un engin mobile tel qu'un aéronef 23 (voir figure 7).

De préférence, comme cela est représenté sur la figure 3, les moyens de connexion 21 sont disposés à l'intérieur d'un renfoncement 25 empiétant sur le volume intérieur du boîtier 3, de sorte que ces moyens de connexion ne dépassent pas du volume enveloppe défini par ce boîtier.

La variante représentée sur les figures 5 et 6 se différentie du mode de réalisation du dispositif qui vient d'être décrit essentiellement en ce que l'obturateur 11 comporte une pluralité d'orifices 13i, et en ce que le boîtier 3 comporte une pluralité de logements cylindriques 15v adaptés pour rester vides, disposés de manière alternée avec les logements 15i adaptés pour recevoir des cartouches.

Les logements 15i comprennent donc des connections électriques permettant la mise à feu des cartouches, tandis que les logements 15v sont dépourvus de connections électriques.

Dans cette variante, le nombre des orifices 13i est égal à celui des logements 15v.

La disposition des orifices 13i sur l'obturateur 11 est telle que ces orifices puissent venir en vis-à-vis des logements 15v, comme cela est visible sur la figure 6.

Dans les deux variantes exposées ci-dessus, l'obturateur 11 est dimensionné pour résister au tir intempestif d'une cartouche (masse éjectée comprise entre 100 et 400 grammes, avec des vitesses initiales comprises entre de 10 et 40 m/s, ceci en fonction du calibre de la cartouche).

De préférence, l'obturateur 11 est pourvu d'un système de réchauffage permettant d'assurer la fonction de dégivrage.

De préférence également, l'obturateur 11 est asservi en rotation avec des moyens connus de l'homme du métier de manière que la position angulaire de cet obturateur puisse être déterminée avec une précision meilleure que 5 degrés.

Les caractéristiques du moteur électrique M1 sont de préférence telles que le passage d'un orifice 13 d'une première position où il se trouve en vis-à-vis d'un logement 15 à une deuxième position où il se trouve en vis-à-vis d'un logement directement adjacent puisse s'effectuer en moins de 50 ms.

On se reporte à présent aux figures 7 à 10, sur lesquelles on a représenté les principales caractéristiques d'un système de sécurité adapté pour équiper le dispositif représenté sur les figures 1 à 4.

Comme cela apparaît en particulier sur la figure 7, ce système de sécurité comprend un volet 22 monté pivotant sur l'obturateur 11 entre une position où il obture l'orifice 13 (figure 8) et une position où il libère cet orifice (figures 9 et 10).

Ce volet 22 est actionné par un électro-aimant M2 solidaire de l'obturateur 11.

On prévoit un trou T dans l'obturateur 11 qui laisse apparaître une couleur verte lorsque le volet 22 obture l'orifice 13 ou lorsque cet orifice 13 est situé au droit du logement vide 15v, et qui laisse apparaître une couleur rouge lorsque le volet 22 n'obture pas l'orifice 13 et que cet orifice 13 est situé au droit de l'un des logements 15i contenant des cartouches.

Pour obtenir ces deux couleurs, on peut prévoir de peindre en vert le volet 22 ainsi qu'une zone au voisinage du logement vide 15v, ainsi que de peindre en rouge une piste P s'étendant entre les logements pleins 15i.

En se reportant aux figures 11 à 14, on peut voir un système de sécurité analogue à celui qui vient d'être décrit appliqué au dispositif représenté aux figures 5 et 6.

Dans ce cas, le volet 22 s'étend sur pratiquement toute la surface de l'obturateur 11 et est agencé pour pourvoir obturer/libérer tous les orifices 13i de l'obturateur 11.

On se reporte à présent aux figures 15 et 16, sur lesquelles on voit respectivement les moyens de connexion 21 sur le point d'être connectés à des moyens complémentaires 21' solidaires d'un aéronef 23, et ces moyens une fois connectés.

On peut voir que l'on peut avantageusement prévoir des battants B permettant de protéger les moyens de connexion 21, ces battants étant escamotables automatiquement lors de la connexion avec les moyens complémentaires 21'.

Cet escamotage des battants B est effectué sous l'effet de la poussée des moyens complémentaires 21', des moyens de ressort étant prévus pour maintenir ces battants en position fermée en dehors des situations de connexion.

Le mode d'utilisation et les avantages du dispositif selon l'invention résultent directement de la description qui précède.

Lorsque l'on souhaite équiper un engin mobile tel qu'un aéronef 23 (voir figure 7) d'un ou plusieurs dispositifs selon l'invention, on prévoit dans le fuselage de cet aéronef au moins une cavité 27 dimensionnée de manière à pouvoir accueillir un dispositif 1.

On pourra avantageusement prévoir deux telles cavités, disposées respectivement à tribord et à babord de l'aéronef.

En principe, ce nombre de cavités n'est pas limité, et sera déterminé à la suite d'une étude d'efficacité opérationnelle prenant en compte les masques aéronefs.

Ces cavités sont bien évidemment placées dans une zone où les projectiles susceptibles de sortir des dispositifs 1 ne risquent pas d'interférer avec les moteurs 29 de l'aéronef.

Ainsi, dans le cas particulier où ces moteurs sont disposés sous les ailes 31 de cet aéronef, comme cela est représenté à la figure 7, les cavités 27 sont situées à l'arrière de ces ailes.

Préalablement au départ de l'aéronef 23, on place des cartouches de leurrage à l'intérieur des logements 15i de chacun des dispositifs 1 selon l'invention.

Comme cela est connu en soi, de telles cartouches présentent une forme complémentaire de celle des logements 15i et comportent d'une part des organes pyrotechniques et d'autre part des leurres à infrarouge ou bien électromagnétiques.

On ne place pas de cartouche dans les logements 15v adaptés pour rester vides.

Après avoir positionné les cartouches de leurrage à l'intérieur du boîtier 3, on ferme ce boîtier au moyen de l'obturateur 11, en plaçant les orifices 13 en vis-à-vis des logements vides 15v, et en veillant à ce que le volet 22 obture les orifices 13.

On s'assure que le couplage mécanique entre l'obturateur 11 et le moteur M1 soit correctement réalisé.

On prend ensuite chaque dispositif 1 et on vient le placer à l'intérieur de l'une des cavités 27 prévues dans le fuselage de l'aéronef 23.

Le guidage du dispositif 1 à l'intérieur de ces cavités 27 s'effectue au moyen des cornières 9a, 9b qui coopèrent avec des rails complémentaires disposés à l'intérieur des cavités 27.

Ces cavités sont suffisamment profondes pour qu'une fois mis en place, les dispositifs 1 ne soient pratiquement pas protubérants par rapport au fuselage de l'aéronef 23.

On solidarise ensuite les dispositifs 1 du fuselage de l'aéronef 23 au moyen des pattes de fixation 7a, 7b, 7c qui sont retenues sur le fuselage au moyen de vis et d'écrous.

On notera que le caractère « rackable » des moyens de connexion 21 permet de connecter ceux-ci de manière très simple à des moyens complémentaires situés à l'intérieur des cavités 27.

Par la suite, si pendant son vol l'aéronef 23 détecte un hostile tel qu'un missile, des signaux de commande sont envoyés au dispositif 1 via les moyens de connexion 21 de manière à :
- faire pivoter le volet 22 de manière à libérer les orifices 13 de l'obturateur 11, puis à
- faire pivoter l'obturateur 11 de sorte que les orifices 13 viennent se placer en vis-à-vis des cartouches disposées à l'intérieur des logements 15i.

On dit dans ce cas que l'obturateur 11 se trouve en position armée (la couleur rouge apparaît à travers le trou T).

Si la menace de l'hostile se confirme, des signaux de commande sont envoyés par l'intermédiaire des moyens de connexion 21 aux cartouches de manière à mettre celles-ci à feu pour envoyer des leurres susceptibles de tromper l'hostile.

On notera que dans le mode de réalisation des figures 1 à 4, une seule cartouche peut être tirée à la fois : la cartouche qui se trouve en vis-à-vis de l'orifice 13.

Au contraire, dans le mode de réalisation des figures 5 et 6, on peut envisager de tirer plusieurs voire la totalité des cartouches à la fois.

Une fois passée la menace de l'hostile, s'il reste encore des cartouches à l'intérieur du boîtier 3, en envoie des signaux de commande visant à repositionner l'obturateur 11 de sorte que toutes les cartouches restantes soient occultées.

A noter ici que si jamais le moteur M1 tombe en panne, il est possible d'obturer les orifices 13 au moyen du volet 22, actionné par le moteur M2.

Ainsi, en pratique, la probabilité pour qu'il soit impossible de faire revenir le dispositif selon l'invention dans une position de sécurité, c'est-à-dire dans une position où les cartouches sont occultées (couleur verte dans le trou T) est très faible (inférieure à 10⁻⁸).

Comme on peut le comprendre à la lumière de ce qui précède, le fait de prévoir au moins un logement adapté pour rester vide permet, en position de sécurité, d'empêcher l'accès aux cartouches par un opérateur non qualifié, et ainsi d'éviter toute mise à feu intempestive.

Le volet 22 offre une sécurité supplémentaire, et permet d'éviter que des corps étrangers n'entrent dans le logement adapté pour rester vide.

Si, par malheur, une ou plusieurs cartouches sont mises à feu de manière intempestive notamment pendant les manipulations et la mise à poste du dispositif 1 sur l'aéronef 23, les projectiles expulsés par ces cartouches demeurent bloqués à l'intérieur du boîtier 3, ce qui protège un opérateur se situant malencontreusement à proximité du dispositif 1.

La grande sécurité qu'offre ce dispositif à obturateur permet d'envisager de l'utiliser dans un contexte civil sans qu'il soit nécessaire de modifier profondément le comportement des opérateurs et la réglementation applicable dans ce domaine.

On notera que le dispositif à obturateur rotatif selon l'invention est d'une conception particulièrement simple, ce qui permet d'envisager de le fabriquer à coût relativement contenu, ainsi que d'obtenir une grande fiabilité.

Ce dispositif peut être très compact : cylindre d'environ 200 mm de diamètre pour environ 200 mm de hauteur.

On notera que le fait de placer ce dispositif dans des cavités 27 de l'aéronef 23 permet de conserver les caractéristiques aérodynamiques de cet aéronef.

On notera également que le fait de placer les moyens de connexion 21 dans un renfoncement 25 permet de protéger ces moyens de connexion lors des manipulations du dispositif 1, et de protéger ces moyens de connexion vis-à-vis des agressions électromagnétiques.

On notera également que le dispositif 1 constitue une excellente cage de Faraday permettant d'isoler les cartouches des perturbations électromagnétiques, ce qui constitue un gage de sécurité supplémentaire vis-à-vis des mises à feu intempestives.

Bien entendu, la présente invention n'est pas limitée au mode de réalisation décrit et représenté. C'est ainsi par exemple que l'on pourrait envisager que l'obturateur comprenne des orifices 13 disposés différemment de ce qui a été exposé ci-dessus.

On pourrait par exemple prévoir deux orifices 13 diamétralement opposés sur l'obturateur 11, ainsi que deux logements vides 15v également disposés de manière diamétralement opposée à l'intérieur du boîtier 3.

C'est ainsi également que l'on pourrait utiliser le dispositif selon l'invention dans un tout autre contexte que celui de la protection vis-à-vis d'hostiles.

On pourrait par exemple placer dans ce dispositif des cartouches permettant de tirer des charges éclairantes, par exemple en vue d'effectuer des opérations nocturnes.

## Revendications

1. Dispositif (1) sécurisé d'emport et de tir de cartouches telles que des cartouches de leurrage comprenant un boîtier (3) comportant une pluralité de logements (15i) adaptés pour recevoir lesdites cartouches et des moyens de connexion (21) adaptés pour relier lesdites cartouches à des moyens de mise à feu extérieurs au boîtier (3), et comprenant un obturateur (11) fermant ledit boîtier (3) et muni d'au moins un orifice (13 ; 13i) adapté pour permettre le passage d'une cartouche,
**caractérisé en ce qu'**il comprend en outre au moins un logement (15v) adapté pour rester vide, dépourvu de connexions électriques, et des moyens pour déplacer ledit obturateur (11) entre une position dite de sécurité dans laquelle ledit orifice (13 ;13i) se trouve en vis-à-vis dudit logement adapté pour rester vide (15v), dépourvu de connexions électriques, et une position dite armée dans laquelle ledit orifice (13 ; 13i) se trouve en vis-à-vis de l'un desdits autres logements.

2. Dispositif (1) selon la revendication 1, dans lequel ledit boîtier (3) est sensiblement cylindrique, l'ensemble desdits logements (15) étant disposés de manière sensiblement circulaire à l'intérieur dudit boîtier (3), et ledit obturateur (11) est sensiblement circulaire et monté rotatif coaxialement audit boîtier (3) de manière que ledit orifice (13 ; 13i) puisse se déplacer sélectivement de l'un à l'autre desdits logements (15).

3. Dispositif (1) selon l'une des revendications 1 ou 2, dans lequel ledit boîtier (3) comporte un seul logement adapté pour rester vide (15v), dépourvu de connexions électriques, et ledit obturateur (11) comprend un seul orifice (13).

4. Dispositif (1) selon l'une des revendications 1 ou 2, dans lequel ledit boîtier (3) comporte une pluralité de logements adaptés pour rester vides (15v), dépourvus de connexions électriques, disposés de manière alternée avec les logements adaptés pour recevoir des cartouches (15i), et ledit obturateur (11) comprend autant d'orifices (13i) que lesdits logements adaptés pour recevoir des cartouches (15i), ces orifices (13i) étant répartis sur ledit obturateur (11) de la même manière que lesdits logements adaptés pour recevoir des cartouches (15i).

5. Dispositif (1) selon l'une quelconque des revendications précédentes, dans lequel lesdits moyens de connexion comprennent un connecteur (21) pouvant être relié électriquement par simple coulissement du dispositif (1) le long de son axe (A) à des moyens de connexion complémentaires.

6. Dispositif (1) selon l'une quelconque des revendications précédentes, comprenant des battants (B) de protection desdits moyens de connexion (21) escamotables automatiquement lors de la mise à poste dudit dispositif (1).

7. Dispositif (1) selon l'une quelconque des revendications précédentes, comprenant des moyens pour asservir ledit obturateur (11) en position.

8. Dispositif (1) selon l'une quelconque des revendications précédentes, comprenant une pluralité de pattes de fixation (7a à 7c).

9. Dispositif (1) selon l'une quelconque des revendications précédentes, comprenant des cornières de guidage (9a, 9b).

10. Dispositif (1) selon l'une quelconque des revendications précédentes, comprenant des moyens de dégivrage.

11. Dispositif (1) selon l'une quelconque des revendications précédentes, comprenant un volet (22) articulé sur ledit obturateur (11) entre une position où il obture ledit orifice (13 ; 13i) et une position où il libère cet orifice.

12. Dispositif (1) selon l'une quelconque des revendications précédentes, dans lequel ledit obturateur comprend un trou (T) adapté pour défiler devant des zones de couleurs indicatives de la position de sécurité ou armée du dispositif.

13. Engin mobile tel qu'un aéronef (23) équipé d'au moins un dispositif (1) conforme à l'une quelconque des revendications précédentes.

14. Engin mobile (23) selon la revendication 13, comprenant une cavité (27) recevant ledit dispositif (1), ladite cavité (27) étant conformée de manière que ledit dispositif (1) ne soit sensiblement pas protubérant par rapport au volume enveloppe dudit engin.

15. Utilisation d'un dispositif conforme à la revendication 1, **caractérisée en ce que** l'on place des cartouches dans tous les logements (15i) sauf dans l'au moins un logement (15v) adapté pour rester vide, dépourvu de connexions électriques, et on déplace sélectivement ledit obturateur (11) entre ladite position de sécurité et ladite position armée.

16. Utilisation selon la revendication 15 d'un dispositif conforme à la revendication 11, dans laquelle on fait pivoter ledit volet (22) de manière à libérer ledit au moins un orifice (13) dudit obturateur (11) juste avant de faire pivoter ledit obturateur (11).

## Claims

1. A secured device (1) for the delivery and firing of cartridges such as decoy cartridges comprising a casing (3) that has a plurality of housings (15i) adapted to receive said cartridges and connection means (21) adapted to connect said cartridges to firing means on the outside of the casing (3), and comprising a shutter (11) closing said casing (3) and provided with at least one orifice (13; 13i) adapted to enable the passage of a cartridge,
**characterised in that** it further comprises at least one housing (15v) adapted to remain empty, without any electric connections, and means for moving said shutter (11) between a so-called secure position in which said orifice (13; 13i) is located facing said housing adapted to remain empty (15v), without any electric connections, and a so-called armed position in which said orifice (13; 13i) is located facing one of said other housings.

2. The device (1) according to Claim 1 in which said casing (3) is substantially cylindrical, all of said housings (15) being arranged substantially circularly within said casing (3), and said shutter (11) is substantially circular and mounted rotatably coaxially to said casing (3) such that said orifice (13; 13i) can move selectively from one to the other of said housings (15).

3. The device (1) according to either of Claims 1 or 2, in which said casing (3) has just one housing adapted to remain empty (15v), without any electric connections, and said shutter (11) comprises just one orifice (13).

4. The device (1) according to either of Claims 1 or 2, in which said casing (3) comprises a plurality of housings adapted to remain empty (15v), without any electric connections, arranged alternating with housings adapted to receive cartridges (15i), and said shutter (11) comprises as many orifices (13i) as said housings adapted to receive cartridges (15i), these orifices (13i) being distributed over said shutter (11) in the same way as said housings adapted to receive cartridges (15i).

5. The device according to any of the preceding claims, in which said connection means comprise a connector (21) that can be connected electrically simply by sliding the device (1) along its axis (A) to complementary connection means.

6. The device (1) according to any of the preceding claims, comprising hinged sections (B) for protecting said connection means (21) and which are automatically retractable when said device (1) is positioned (1).

7. The device (1) according to any of the preceding claims, comprising means for controlling said shutter (11) in position.

8. The device (1) according to any of the preceding claims, comprising a plurality of fixing feet (7a to 7c).

9. The device (1) according to any of the preceding claims, comprising guide angle pieces (9a, 9b).

10. The device (1) according to any of the preceding claims, comprising defrosting means.

11. The device (1) according to any of the preceding claims, comprising an articulated flap (22) on said shutter (11) between a position where it blocks said orifice (13; 13i) and a position where it frees this orifice.

12. The device (1) according to any of the preceding claims, in which said shutter comprises a hole (T) adapted to file past coloured zones indicating the secure or armed position of the device.

13. A mobile vehicle such as an aircraft (23) equipped with at least one device (1) according to any of the preceding claims.

14. The mobile vehicle (23) according to Claim 13, comprising a cavity (27) receiving said device (1), said cavity (27) being shaped such that said device (1) is substantially non-protruding in relation to the enveloping volume of said vehicle.

15. The use of a device according to Claim 1, **characterised in that** one places cartridges in all of the housings (15i) except in at least one housing (15v) adapted to remain empty, without any electric connections, and the shutter (11) is moved selectively between said secure position and said armed position.

16. The use according to Claim 15 of a device according to Claim 11, in which said flap (22) is pivoted such as to release said at least one orifice (13) of said shutter (11) just before pivoting said shutter (11).

## Patentansprüche

1. Gesicherte Vorrichtung (1) zum Transportieren und Verschießen von Patronen wie etwa von Köderpatronen, mit einem Gehäuse (3), das mehrere Aufnahmeräume (15i), die dazu ausgelegt sind, die Patronen aufzunehmen, und Verbindungsmittel (21), die dazu ausgelegt sind, die Patronen mit Abschussmitteln außerhalb des Gehäuses (3) zu verbinden, aufweist, und mit einem Verschluss (11), der das Gehäuse (3) verschließt und mit wenigstens einer Öffnung (13; 13i) versehen ist, die dazu ausgelegt ist, den Durchgang einer Patrone zu ermöglichen,
**dadurch gekennzeichnet, dass** sie außerdem wenigstens einen Aufnahmeraum (15v) umfasst, der leer bleiben soll und keine elektrischen Verbindungen aufweist, und Mittel zum Verlagern des Verschlusses (11) zwischen einer so genannten Sicherheitsposition, in der sich die Öffnung (13; 13i) gegenüber dem Aufnahmesitz (15v) befindet, der leer bleiben soll und keine elektrischen Verbindungen aufweist, und einer so genannten scharfen Position, in der sich die Öffnung (13; 13i) gegenüber einem der anderen Aufnahmeräume befindet, umfasst.

2. Vorrichtung (1) nach Anspruch 1, wobei das Gehäuse (3) im Wesentlichen zylindrisch ist, wobei die Gesamtheit der Aufnahmeräume (15) im Wesentlichen kreisförmig in dem Gehäuse (3) angeordnet ist und der Verschluss (11) im Wesentlichen kreisförmig ist und koaxial zu dem Gehäuse (3) drehbar montiert ist, derart, dass sich die Öffnung (13; 13i) wahlweise von einem zum nächsten der Aufnahmeräume (15) verlagern kann.

3. Vorrichtung (1) nach einem der Ansprüche 1 oder 2, wobei das Gehäuse (3) einen einzigen Aufnahmeraum (15v) umfasst, der leer bleiben soll und keine elektrischen Verbindungen aufweist, und wobei der Verschluss (11) eine einzige Öffnung (13) aufweist.

4. Vorrichtung (1) nach einem der Ansprüche 1 oder 2, wobei das Gehäuse (3) mehrere Aufnahmeräume (15v) aufweist, die leer bleiben sollen und keine elektrischen Verbindungen aufweisen und abwechselnd mit Aufnahmeräumen angeordnet sind, die Patronen (15i) aufnehmen sollen, wobei der Verschluss (11) so viele Öffnungen (13i) umfasst, wie Aufnahmeräume vorhanden sind, die Patronen (15i) aufnehmen sollen, wobei diese Öffnungen (13) in dem Verschluss (11) in der gleichen Weise wie die Aufnahmeräume (15i), die Patronen aufnehmen sollen, verteilt sind.

5. Vorrichtung (1) nach einem der vorhergehenden Ansprüche, wobei die Verbindungsmittel einen Verbinder (21) umfassen, der durch einfaches Gleiten der Vorrichtung (1) längs ihrer Achse (A) mit komplementären Verbindungsmitteln elektrisch verbunden werden kann.

6. Vorrichtung (1) nach einem der vorhergehenden Ansprüche, die Schutzflügel (B) für die Verbindungsmittel (21) umfasst, die automatisch einfahrbar sind, wenn die Vorrichtung (1) in Stellung gebracht wird.

7. Vorrichtung (1) nach einem der vorhergehenden Ansprüche, die Mittel umfasst, um den Verschluss (11) in seine Position zu steuern.

8. Vorrichtung (1) nach einem der vorhergehenden Ansprüche, die mehrere Befestigungslaschen (7a bis 7c) umfasst.

9. Vorrichtung (1) nach einem der vorhergehenden Ansprüche, die Führungswinkelprofile (9a, 9b) umfasst.

10. Vorrichtung (1) nach einem der vorhergehenden Ansprüche, die Enteisungsmittel umfasst.

11. Vorrichtung (1) nach einem der vorhergehenden Ansprüche, die eine Klappe (22) umfasst, die an dem Verschluss (11) zwischen einer Position, in der sie die Öffnung (13; 13i) verschließt, und einer Position, in der sie diese Öffnung freigibt, angelenkt ist.

12. Vorrichtung (1) nach einem der vorhergehenden Ansprüche, wobei der Verschluss ein Loch (T) aufweist, das dazu ausgelegt ist, sich vor den Farbzonen vorbeizubewegen, die die gesicherte oder die scharfe Position der Vorrichtung angeben.

13. Bewegliche Maschine wie etwa ein Flugzeug (23), die mit wenigstens einer Vorrichtung (1) nach einem der vorhergehenden Ansprüche ausgestattet ist.

14. Bewegliche Maschine (23) nach Anspruch 13, die einen Hohlraum (27) aufweist, der die Vorrichtung (1) aufnimmt, wobei der Hohlraum (27) so beschaffen ist, dass die Vorrichtung (1) von dem umschlossenen Volumen der Maschine im Wesentlichen nicht vorsteht.

15. Verwendung einer Vorrichtung nach Anspruch 1, **dadurch gekennzeichnet, dass** die Patronen in allen Aufnahmeräumen (15i) mit Ausnahme wenigstens eines Aufnahmeraums (15v), der leer bleiben soll und keine elektrischen Verbindungen aufweist, angeordnet werden und der Verschluss (11) wahlweise zwischen der gesicherten Position und der scharfen Position verlagert wird.

16. Verwendung nach Anspruch 15 einer Vorrichtung nach Anspruch 11, wobei die Klappe (22) in der Weise geschwenkt wird, dass sie wenigstens eine Öffnung (13) des Verschlusses (11) direkt vor dem Schwenken des Verschlusses (11) freigibt.
